(19) Europäisches Patentamt
European Patent Office
Office européen des brevets

(11) **EP 4 653 707 A1**

(12) **EUROPEAN PATENT APPLICATION**

(43) Date of publication:
26.11.2025  Bulletin 2025/48

(21) Application number: 25177043.4

(22) Date of filing: 16.05.2025

(51) International Patent Classification (IPC):
**F15B 11/036** (2006.01)   **E02F 9/22** (2006.01)

(52) Cooperative Patent Classification (CPC):
**F15B 11/036; E02F 9/2271;** F15B 2211/20592;
F15B 2211/7055; F15B 2211/7107; F15B 2211/76

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 21.05.2024  IN 202441039677

(71) Applicant: **Wipro Enterprises Pvt. Ltd.
Bengaluru, Karnataka 560034 (IN)**

(72) Inventors:
• **RAO, Vanka Ganeswara
560058 Bengaluru (IN)**
• **RAHUL, S
560058 Bengaluru (IN)**

(74) Representative: **Budde Schou A/S
Dronningens Tvaergade 30
1302 Copenhagen K (DK)**

(54) **AN ACTUATOR ASSEMBLY FOR A HEAVY CONSTRUCTION MACHINE**

(57) The disclosure herein generally relate to heavy construction machines and more particularly to an actuator assembly for the heavy construction machine such as but not limited to an excavator. The actuator assembly (1000) includes a main cylinder assembly (1100) and a plunger cylinder assembly (1200) disposed parallel to the main cylinder assembly (1100). The main cylinder assembly (1100) is a double acting cylinder assembly, and the plunger cylinder assembly (1200) is a single acting cylinder assembly. The actuator assembly (1000) includes three chambers (1102A, 1102B, 1202A) adapted to be selectively coupled with at least one of a high pressure (HP) hydraulic line, a medium pressure (MP) hydraulic line and a low pressure hydraulic line (LP) based on load requirement of actuator assembly (1000). The actuator assembly (1000) is configured to reduce throttling loss at control valves thereby reducing an overall power consumption of heavy construction machine.

Fig. 1A

Fig. 1B

**Description**

## TECHNICAL FIELD

The embodiments herein generally relate to heavy construction machines and more particularly to an actuator assembly for the heavy construction machine such as but not limited to an excavator.

## BACKGROUND

Generally, an excavator is a heavy construction machine which is used in construction related activities and earth moving activities. For example, the excavators are used mainly for digging purposes as well as various lifting and carrying tasks in various applications. Further, special tools such as hydraulic breakers, cutters, shears, grapples, couplers, etc. can be attached at the end of the various boom and arm configurations thereby allowing the excavators to perform a wider range of activities. Typically, the excavator includes a boom, arm, bucket and cab on a rotating superstructure atop an undercarriage with tracks or wheels. Each of the arm, boom and the bucket of the excavator utilizes a hydraulic actuator. The hydraulic cylinder generates a force to move objects based on the hydraulic pressure within the cylinder and the effective area of a piston moving within the cylinder resulting in a load force. In typical cylinders, two chambers are used, each with a respective effective area, such an arrangement creates a force in each direction. The net force resultant of pressurized fluid acting in both areas of the cylinders is typically referred to as a cylinder load. Conventional applications usually act on the flowrate in/out one chamber while the remainder chamber is kept at a pressure as low as possible in order to reduce system losses. Different hydraulic control architectures were developed over the years, especially as the number of hydraulic actuators per machine increased. Commonly, these architectures have the use of shared hydraulic power supply, e.g., a hydrostatic pump, and control valves dedicated to each actuator. The associated challenges with these architectures is that the first challenge is the controllability of multiple actuators with a single and shared source of hydraulic power, and the second challenge is the energy efficiency. While different approaches have been successful with regards to the first challenge, most circuits currently available still suffer from low efficiency when powering more than one actuator at a time mostly due to throttling losses in control valves. When more than one hydraulic actuator shares the same hydraulic supply, the supplied pressure must be slightly higher than the maximum pressure requirements in the system. Therefore, any other hydraulic actuator requiring lower pressure to achieve the desired load will need throttle control to decrease the supply pressure to the desired level, which leads to power losses which may vary from 35% to 72% of total energy consumption.

Therefore, there exists a need for an actuator assembly, which obviates the aforementioned drawbacks.

## OBJECTS

The principal object of embodiments herein is to provide an actuator assembly with three chambers for heavy construction machine (excavator) to reduce throttling loss at control valves.

Another object of embodiments herein is to reduce energy power consumption of the heavy construction machine (excavator).

These and other objects of embodiments herein will be better appreciated and understood when considered in conjunction with following description and accompanying drawings. It should be understood, however, that the following descriptions, while indicating embodiments and numerous specific details thereof, are given by way of illustration and not of limitation. Many changes and modifications may be made within the scope of the embodiments herein without departing from the spirit thereof, and the embodiments herein include all such modifications.

## BRIEF DESCRIPTION OF DRAWINGS

The embodiments are illustrated in the accompanying drawings, throughout which like reference letters indicate corresponding parts in various figures. The embodiments herein will be better understood from the following description with reference to the drawings, in which:

Fig. 1A depicts a sectional view of an actuator assembly for a heavy constructional machine in which the actuator assembly is in a retracted position, according to embodiments as disclosed herein;

Fig. 1B depicts a sectional view of the actuator assembly in an extended position, according to embodiments as disclosed herein;

Fig. 2A depicts a perspective view of a main cylinder assembly of the actuator assembly, according to embodiments as disclosed herein;

Fig. 2B depicts a sectional view of the main cylinder assembly, according to embodiments as disclosed herein;

Fig. 3A depicts a perspective view of a plunger cylinder assembly of the actuator assembly, according to embodiments as disclosed herein;

Fig. 3B depicts a sectional view of the plunger cylinder assembly, according to embodiments as disclosed herein; and

Fig. 4 depicts a circuit diagram of the actuator assembly coupled to a high pressure hydraulic line, a medium pressure hydraulic line and a low pressure hydraulic line, according to embodiments as disclosed herein.

## DETAILED DESCRIPTION

The embodiments herein and the various features and advantages details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

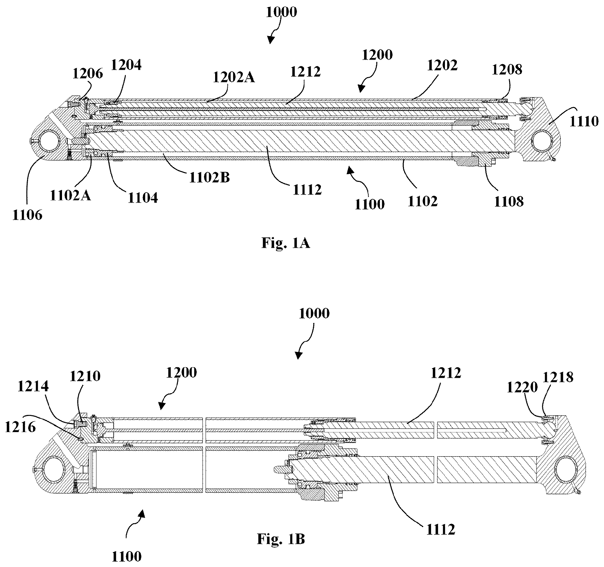

The embodiments herein achieve an actuator assembly with three chambers for a heavy construction machine such as but not limited to an excavator. Referring now to the drawings Figs. 1 through 4, where similar reference characters denote corresponding features consistently throughout the figures, there are shown embodiments.

Fig. 1A depicts a sectional view of an actuator assembly (1000) for a heavy constructional machine in which the actuator assembly (1000) is in a retracted position, according to embodiments as disclosed herein. In an embodiment, the actuator assembly (1000) includes a main cylinder assembly (1100) and a plunger cylinder assembly (1200) disposed parallel to the main cylinder assembly (1100). The main cylinder assembly (1100) is a double acting cylinder assembly, and the plunger cylinder assembly (1200) is a single acting cylinder assembly. For the purpose of this description and ease of understanding, the actuator assembly (1000) is explained herein with below reference to be provided in the heavy construction machine such as but not limited to an excavator. However, it is also within the scope of the invention to use/practice the actuator assembly (1000) in or any other vehicles or any other applications without otherwise deterring the intended function of the actuator assembly (1000) as can be deduced from the description and corresponding drawings.

Each of boom, arm and bucket of the heavy construction machine utilizes the actuator assembly (1000). To minimize the pressure difference between the supply system and the pressure requirements of each one of the actuators (1000) sharing the same supply, common pressure rail (CPR) system is introduced. To achieve such a condition, it is possible to (1) increase the number of supply pressure rails such that more than one supply pressure is available, and (2) increase the number of cylinder chambers such that different combinations of connections between chambers and supply rails can be used to minimize the throttling requirement, therefore reducing system losses. With more options to combine different chamber areas and pressures, it is possible to achieve the same load (effective cylinder force) with a lower difference between supply pressure and chamber pressure, therefore decreasing throttling losses. As a result, the higher the number of available combinations (cylinder modes), the actuator assembly (1000) becomes more efficient. The relationship between pressure rails and the number of chambers in achieving discretized number of possible connections between pressure rails and cylinder chambers (modes) for different applications is governed by the equation as follows.

$$n_{FL} = n_{PR}^{n_{CC}}$$

where $n_{FL}$ is the number of available force modes, $n_{PR}$ is the number of pressure rails and $n_{CC}$ is the number of cylinder chambers. Therefore, it is possible to increase the number of static force modes available by adding extra chambers to the actuator. In the embodiment, the number of cylinder chambers ($n_{CC}$) is three and the number of pressure rails ($n_{PR}$) is three. Therefore, the actuator assembly (1000) is configured to have 27 force modes.

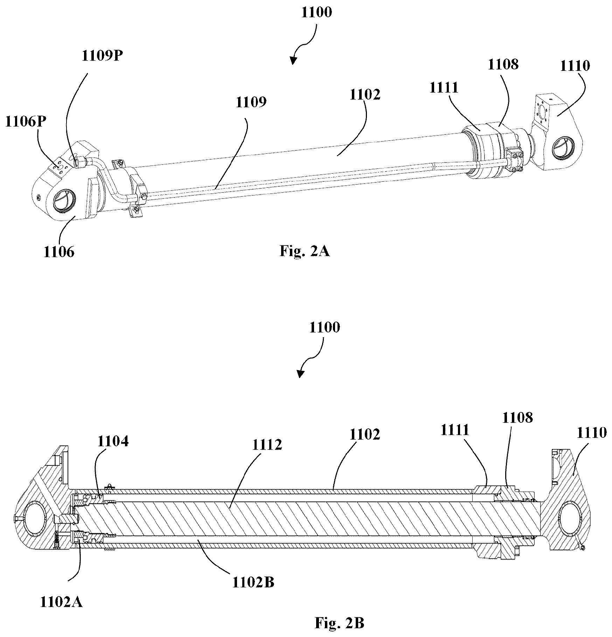

Fig. 2A and fig. 2B illustrates the main cylinder assembly (1100) of the actuator assembly (1000), according to embodiments as disclosed herein. In an embodiment, the main cylinder assembly (1100) includes a main cylinder (1102), a main cylinder piston (1104), a main cylinder cap end cover (1106), a main cylinder head end cover (1108), a main cylinder rod eye (1110) and a main cylinder piston rod (1112). The main cylinder (1102) defines a first chamber (1102A) and a second chamber (1102B) (as shown in fig. 1A) in which the main cylinder piston (1104) separates the first chamber (1102A) from the second chamber (1102B). The main cylinder piston (1104) is slidably disposed within the main cylinder (1102). The main cylinder cap end cover (1106) is connected to one end of the main cylinder (1102). For example, the main cylinder cap end cover (1106) is welded to one end of the main cylinder (1102). The main cylinder cap end cover (1106) defines a main cylinder cap end side port (1106P) adapted to facilitate entry or exit of hydraulic fluid with the first chamber (1102A) of the main cylinder (1102). The main cylinder assembly (1100) includes a hydraulic fluid delivery tube (1109), wherein one end of the tube (1109) is connected to the main cylinder head end cover (1108) and another end of the tube (1109) defines a main cylinder head end side port (1109P) adapted to facilitate entry or exit of hydraulic fluid with respect to the second chamber (1102B) of the main cylinder (1102). The main cylinder head end cover (1108) is coupled to another end of the main cylinder (1102). For example, the main cylinder head end cover (1108) is removably connected to a flange (1111) which is fixedly connected (welded) to another end of the main cylinder (1102). One end of the main cylinder piston rod (1112) is connected to the main cylinder piston (1104) and another end of the main cylinder piston rod (1112) is connected to the main cylinder rod eye (1110).

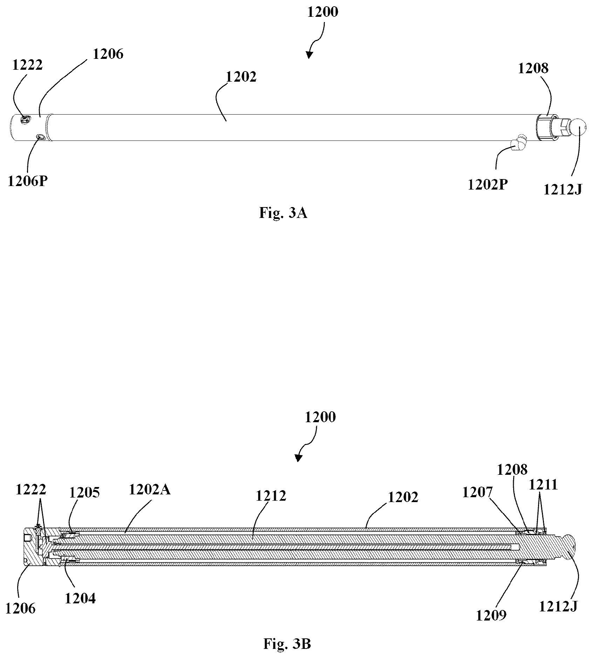

Fig. 3A and fig. 3B illustrates the plunger cylinder assembly (1200) of the actuator assembly (1000), according to embodiments as disclosed herein. In an embodiment, the plunger cylinder assembly (1200) includes a plunger cylinder (1202), a plunger cylinder piston (1204), a plunger cylinder piston bearing (1205), a plunger cylinder cap end cover (1206), a plunger cylinder bimetallic bush (1207), a plunger cylinder head end cover (1208), at least one first sealing element (1209), a plurality of second sealing elements (1211), a plunger cylinder piston rod (1212), and a linear position sensor (1222).

The plunger cylinder (1202) defines a third chamber (1202A) (as shown in fig. 1A) therein. The plunger cylinder (1202) is provided with an aeration port (1202P) (as shown in fig. 3A) adapted to facilitate removal of air entrapped inside the plunger cylinder (1202). The removal of air from the plunger cylinder (1202) is performed prior to installation of the actuator assembly (1000) to the heavy construction machine. The plunger cylinder piston (1204) is slidably disposed within the plunger cylinder (1202). The plunger cylinder piston bearing (1205) is adapted to be mounted onto the plunger cylinder piston (1204), wherein the plunger cylinder piston (1204) is not provided with piston seal and a gap is defined between the plunger cylinder piston bearing (1205) and the plunger cylinder piston (1204) to allow hydraulic fluid flow from one side of the plunger cylinder piston (1204) to another side of the plunger cylinder piston (1204). The third chamber (1202A) of the plunger cylinder (1202) includes area from both sides of the plunger cylinder piston (1204). The plunger cylinder cap end cover (1206) is connected to one end of the plunger cylinder (1202). The plunger cylinder cap end cover (1206) defines a plunger cylinder cap end side port (1206P) adapted to facilitate entry or exit of hydraulic fluid with respect to the third chamber (1202A) of the plunger cylinder (1202). The plunger cylinder bimetallic bush (1207) is adapted to be received by a bush receiving groove (not shown) defined in plunger cylinder head end cover (1208) at is inner side. The plunger cylinder bimetallic bush (1207) is adapted to guide the plunger cylinder piston rod (1212) during extension and retraction of the plunger cylinder piston rod (1212). The plunger cylinder piston bearing (1205) and the plunger cylinder bimetallic bush (1207) are adapted to improve side load carrying capacity of the plunger cylinder assembly (1200). The plunger cylinder head end cover (1208) is removably connected to another end of the plunger cylinder (1202). The first sealing element (1209) is adapted to be received by a first seal receiving groove (not shown) defined on the plunger cylinder head end cover (1208) at its outer side and is engaged with the plunger cylinder (1202). Each of the second sealing element (1211) is adapted to be received by a second seal receiving groove (not shown) defined in the plunger cylinder head end cover (1208) at its inner side and is engaged with the plunger cylinder piston rod (1212). One end of the plunger cylinder piston rod (1212) is connected to the plunger cylinder piston (1204) and another end of the plunger cylinder piston rod (1212) defines a ball-socket joint (1212J) which is connected to the main cylinder rod eye (1110) of the main cylinder assembly (1100). The ball-socket joint (1212J) is provided to improve the flexibility and degree of freedom for the plunger cylinder piston rod (1212). In an embodiment, the actuator assembly (1000) includes a locating pin (1216) adapted to connect the plunger cylinder cap end cover (1206) with the main cylinder cap end cover (1106) thereby positioning (aligning) the plunger cylinder assembly (1200) with respect to the main cylinder cap end cover (1106). In an embodiment, the actuator assembly (1000) includes at least one first locking element (1210) adapted to lock the plunger cylinder cap end cover (1206) to the main cylinder cap end cover (1106) thereby locking the plunger cylinder assembly (1200) with the main cylinder cap end cover (1106). For the purpose of this description and ease of understanding, the first locking element (1210) is considered to be a bolt. In an embodiment, the actuator assembly (1000) includes a first retention member (1214) adapted to retain the first locking element (1210) against the main cylinder cap end cover (1106). For the purpose of this description and ease of understanding, the first retention member (1214) is at least a snap ring. In an embodiment, the actuator assembly (1000) includes a second retention member (1218) adapted to retain the ball-socket joint (1212J) against the main cylinder rod eye (1110). Further, in an embodiment, the actuator assembly (1000) includes a plurality of second locking elements (1220) adapted to lock the second retention member (1218) against the main cylinder rod eye (1110). For the purpose of this description and ease of understanding, each of the second locking element (1220) is at least a bolt. The linear position sensor (1222) is adapted to detect a position/ stroke of the actuator assembly (1000) and sends an output signal to a controller unit of the heavy construction machine. The linear position sensor (1222) is configured to utilize magneto strictive property to determine the position of the plunger cylinder piston rod (1212) and the main cylinder piston rod (1112) and sends velocity feedback to the controller unit (control system) which in turn estimates the required flow rate from pressure rails.

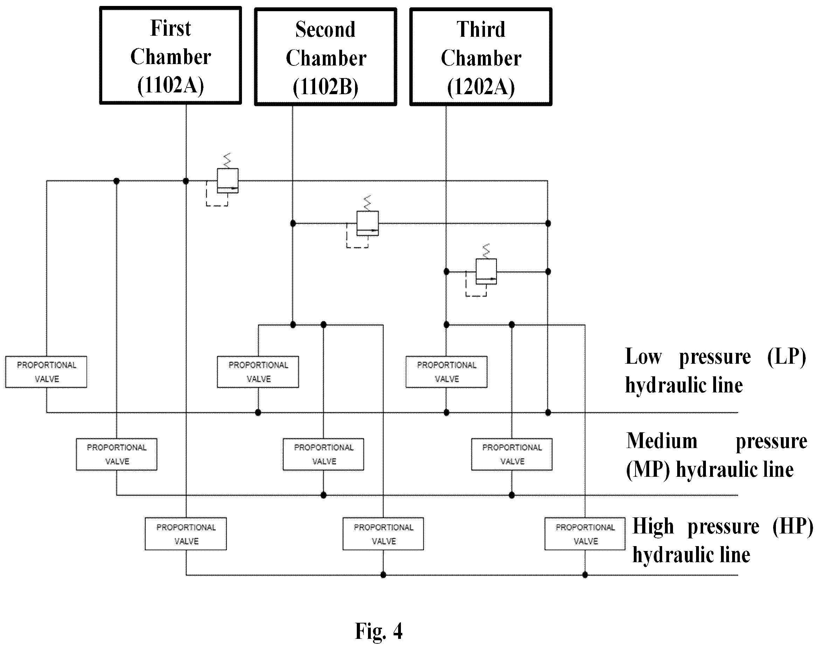

Fig. 4 depicts a circuit diagram of the actuator assembly (1000) coupled to a high pressure (HP) hydraulic line, a medium pressure (MP) hydraulic line and a low pressure (LP) hydraulic line, according to embodiments as disclosed herein. Each of the first, second and third chambers (1102A, 1102B, 1202A) are selectively provided in fluid communication with one of the high pressure (HP) hydraulic line, the medium pressure (MP) hydraulic line and the low pressure (LP) hydraulic line based on load requirement of the actuator assembly (1000). If the sum of the force generated in the first chamber (1102A) of the main cylinder (1102) and the third chamber (1202A) of the plunger cylinder (1202) exceeds the force generated in second chamber (1102B) of the main cylinder (1102), then the main cylinder piston rod (1112) and the plunger cylinder piston rod (1212) moves to an extended position (as shown in fig. 1B). For example, the first chamber (1102A) of the main cylinder (1102) and the third chamber (1202A) of the plunger cylinder (1202) are configured to selectively receive hydraulic fluid from any one of the high pressure hydraulic line, the medium pressure hydraulic line and the low pressure hydraulic line through the main cylinder cap end side port (1106P) and the plunger cylinder cap end side port (1206P) respectively, and the hydraulic fluid exits from the second chamber (1102B) of the main cylinder (1102) to the corresponding pressure hydraulic line to which it is connected for facilitating extension of the main cylinder piston rod (1112) and the plunger cylinder piston rod (1212) based on load requirement of the actuator assembly (1000). Conversely, if the force generated in the second chamber (1102B) of the main cylinder (1102) surpasses the combined force in first chamber (1102A) of the main cylinder (1102) and the third chamber (1202A) of the plunger cylinder (1202), then the main cylinder piston rod (1112) along with the plunger cylinder piston rod (1212) moves to a retracted position (as shown in fig. 1A). For example, the second chamber (1102B) of the main cylinder (1102) is configured to selectively receive hydraulic fluid from any one of the high pressure hydraulic line and the medium pressure hydraulic line through the main cylinder head end side port (1109P), and the hydraulic fluid exits from the first chamber (1102A) of the main cylinder (1102) and the third chamber (1202A) of the plunger cylinder (1202) to respective pressure hydraulic line to which it is connected for facilitating retraction of the main cylinder piston rod (1112) along with the plunger cylinder piston rod (1212) based on load requirement of the actuator assembly (1000). The stroke of the plunger cylinder assembly (1200) is slightly more than the stroke of the main cylinder assembly (1100) so that during the entire operation of the actuator assembly (1000), the plunger cylinder piston (1204) doesn't contact with plunger cylinder cap end cover (1206) and the plunger cylinder head end cover (1208).

The technical advantages of the actuator assembly (1000) are as follows. The actuator assembly (1000) is configured to reduce throttling loss at control valves thereby reducing an overall power consumption of the heavy construction machine.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of embodiments, those skilled in the art will recognize that the embodiments herein can be practiced with modifications within the spirit and scope of the embodiments as described herein.

**Claims**

1. An actuator assembly (1000) for a heavy construction machine, the actuator assembly (1000) comprising:

    a main cylinder assembly (1100) having a main cylinder (1102) and a main cylinder piston (1104) slidably disposed within the main cylinder (1102); and
    a plunger cylinder assembly (1200) disposed parallel to the main cylinder assembly (1100), wherein the plunger cylinder assembly (1200) includes a plunger cylinder (1202) and a plunger cylinder piston (1204) slidably disposed within the plunger cylinder (1202),

    wherein

    the main cylinder assembly (1100) is a double acting cylinder assembly in which the main cylinder (1102) defines a first chamber (1102A) and a second chamber (1102B) in which the main cylinder piston (1104) separates the first chamber (1102A) from the second chamber (1102B);
    the plunger cylinder assembly (1200) is a single acting cylinder assembly in which the plunger cylinder (1202) defines a third chamber (1202A) therein; and
    each of the first, second and third chambers (1102A, 1102B, 1202A) are selectively provided in fluid communication with one of a high pressure (HP) hydraulic line, a medium pressure (MP) hydraulic line and a low pressure hydraulic line (LP) based on load requirement of the actuator assembly (1000).

2. The actuator assembly (1000) as claimed in claim 1, wherein the main cylinder assembly (1100) includes:

    a main cylinder cap end cover (1106) connected to one end of the main cylinder (1102);
    a main cylinder head end cover (1108) connected to another end of the main cylinder (1102) through a flange (1111);

a main cylinder rod eye (1110); and

a main cylinder piston rod (1112), wherein one end of the main cylinder piston rod (1112) is connected to the main cylinder piston (1104) and another end of the main cylinder piston rod (1112) is connected to the main cylinder rod eye (1110).

3. The actuator assembly (1000) as claimed in claim 2, wherein the plunger cylinder assembly (1200) includes:

a plunger cylinder cap end cover (1206) connected to one end of the plunger cylinder (1202);

a plunger cylinder head end cover (1208) removably connected to another end of the plunger cylinder (1202); and

a plunger cylinder piston rod (1212), wherein one end of the plunger cylinder piston rod (1212) is connected to the plunger cylinder piston (1204) and another end of the plunger cylinder piston rod (1212) defines a ball-socket joint (1212J) connected to the main cylinder rod eye (1110) of the main cylinder assembly (1100).

4. The actuator assembly (1000) as claimed in claim 3, wherein the actuator assembly (1000) includes:

a locating pin (1216) adapted to connect the plunger cylinder cap end cover (1206) with the main cylinder cap end cover (1106) thereby positioning (aligning) the plunger cylinder assembly (1200) with respect to the main cylinder cap end cover (1106);

at least one first locking element (1210) adapted to lock said plunger cylinder cap end cover (1206) to the main cylinder cap end cover (1106) thereby locking the plunger cylinder assembly (1200) with the main cylinder cap end cover (1106), wherein the first locking element (1210) is at least a bolt; and

a first retention member (1214) adapted to retain the first locking element (1210) against the main cylinder cap end cover (1106), wherein the first retention member (1214) is at least a snap ring.

5. The actuator assembly (1000) as claimed in claim 3, wherein the actuator assembly (1000) includes:

a second retention member (1218) adapted to retain the ball-socket joint (1212J) against the main cylinder rod eye (1110); and

a plurality of second locking elements (1220) adapted to lock the second retention member (1218) against the main cylinder rod eye (1110), wherein each of the second locking element (1220) is at least a bolt.

6. The actuator assembly (1000) as claimed in claim 3, wherein the plunger cylinder assembly (1200) includes a linear position sensor (1222) adapted to detect a position/ stroke of the actuator assembly (1000),
wherein

the linear position sensor (1222) is configured to utilize magneto strictive property to determine the position of the plunger cylinder piston rod (1212) and the main cylinder piston rod (1112) and sends velocity feedback to a controller unit (control system) which in turn estimates the required flow rate from pressure rails;

the plunger cylinder cap end cover (1206) defines a plunger cylinder cap end side port (1206P) adapted to facilitate entry or exit of hydraulic fluid with respect to the third chamber (1202A) of the plunger cylinder (1202);

the main cylinder cap end cover (1106) defines a main cylinder cap end side port (1106P) adapted to facilitate entry or exit of hydraulic fluid with the first chamber (1102A) of the main cylinder (1102); and

the main cylinder assembly (1100) includes a hydraulic fluid delivery tube (1109), wherein one end of the tube (1109) is connected to the main cylinder head end cover (1108) and another end of the tube (1109) defines a main cylinder head end side port (1109P) adapted to facilitate entry or exit of hydraulic fluid with respect to the second chamber (1102B) of the main cylinder (1102).

7. The actuator assembly (1000) as claimed in claim 1, wherein the plunger cylinder assembly (1200) includes:

a plunger cylinder piston bearing (1205) adapted to be mounted onto the plunger cylinder piston (1204), wherein a gap is defined between the plunger cylinder piston bearing (1205) and the plunger cylinder piston (1204) to allow hydraulic fluid flow from one side of the plunger cylinder piston (1204) to another side of the plunger cylinder piston (1204), wherein the third chamber (1202A) of the plunger cylinder (1202) includes area from both sides of the plunger cylinder piston (1204); and

a plunger cylinder bimetallic bush (1207) is adapted to be received by a bush receiving groove defined in plunger cylinder head end cover (1208) at is inner side, wherein

the plunger cylinder piston bearing (1205) and the plunger cylinder bimetallic bush (1207) are adapted to improve side load carrying capacity of the plunger cylinder assembly (1200); and the plunger cylinder bimetallic bush (1207) is adapted to guide the plunger cylinder piston rod (1212) during extension and retraction of the plunger cylinder piston rod (1212).

8. The actuator assembly (1000) as claimed in claim 3, wherein the plunger cylinder assembly (1200) includes:

   at least one first sealing element (1209) adapted to be received by a first seal receiving groove defined on the plunger cylinder head end cover (1208) at its outer side and is engaged with the plunger cylinder (1202); and
   a plurality of second sealing elements (1211), wherein each of the second sealing element (1211) is adapted to be received by a second seal receiving groove defined in the plunger cylinder head end cover (1208) at its inner side and is engaged with the plunger cylinder piston rod (1212).

9. The actuator assembly (1000) as claimed in claim 1, wherein the first chamber (1102A) of the main cylinder (1102) and the third chamber (1202A) of the plunger cylinder (1202) are configured to selectively receive hydraulic fluid from any one of the high pressure hydraulic line, the medium pressure hydraulic line and the low pressure hydraulic line through the main cylinder cap end side port (1106P) and the plunger cylinder cap end side port (1206P) respectively, and the hydraulic fluid exits from the second chamber (1102B) of the main cylinder (1102) to the corresponding pressure hydraulic line to which it is connected for facilitating extension of the main cylinder piston rod (1112) and the plunger cylinder piston rod (1212) based on load requirement of the actuator assembly (1000); and
   the second chamber (1102B) of the main cylinder (1102) is configured to selectively receive hydraulic fluid from any one of the high pressure hydraulic line and the medium pressure hydraulic line through the main cylinder head end side port (1109P) and the hydraulic fluid exits from the first chamber (1102A) of the main cylinder (1102) and the third chamber (1202A) of the plunger cylinder (1202) to respective pressure hydraulic line to which it is connected for facilitating retraction of the main cylinder piston rod (1112) along with the plunger cylinder piston rod (1212) based on load requirement of the actuator assembly (1000).

10. The actuator assembly (1000) as claimed in claim 9, wherein the main cylinder piston rod (1112) and the plunger cylinder piston rod (1212) moves to the extended position when the sum of the force generated in the first chamber (1102A) of the main cylinder (1102) and the third chamber (1202A) of the plunger cylinder (1202) exceeds the force generated in second chamber (1102B) of the main cylinder (1102);

the main cylinder piston rod (1112) along with the plunger cylinder piston rod (1212) moves to the retracted position when the force generated in the second chamber (1102B) of the main cylinder (1102) surpasses the combined force in first chamber (1102A) of the main cylinder (1102) and the third chamber (1202A) of the plunger cylinder (1202); and
a stroke of the plunger cylinder assembly (1200) is more than a stroke of the main cylinder assembly (1100) so that during the entire operation of the actuator assembly (1000), the plunger cylinder piston (1204) doesn't contact with plunger cylinder cap end cover (1206) and the plunger cylinder head end cover (1208).

Fig. 1A

Fig. 1B

Fig. 2A

Fig. 2B

1200

1222    1206                    1202                         1208

1206P                            1202P      1212J

Fig. 3A

1200

1208
1222   1205   1202A      1212          1202      1207   1211

1206   1204                           1209   1212J

Fig. 3B

First Chamber (1102A)

Second Chamber (1102B)

Third Chamber (1202A)

Low pressure (LP) hydraulic line

Medium pressure (MP) hydraulic line

High pressure (HP) hydraulic line

PROPORTIONAL VALVE

PROPORTIONAL VALVE

PROPORTIONAL VALVE

PROPORTIONAL VALVE

PROPORTIONAL VALVE

PROPORTIONAL VALVE

PROPORTIONAL VALVE

PROPORTIONAL VALVE

PROPORTIONAL VALVE

Fig. 4

## EUROPEAN SEARCH REPORT

Europäisches
Patentamt
European
Patent Office
Office européen
des brevets

**Application Number**

**EP 25 17 7043**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 376 612 A (YEOU VICTOR [FR]) 15 March 1983 (1983-03-15) | 1,2,7 | INV. F15B11/036 E02F9/22 |
| Y | * column 3, line 37 - column 4, line 10 * | 1,9,10 | |
| A | | 3-6,8 | |
| X | US 2022/267982 A1 (GEIGER RENÉ [CH]) 25 August 2022 (2022-08-25) * paragraphs [0008], [0029] - [0035]; figures 3,5,7 * | 1 | |
| X | US 2020/340503 A1 (WELLENBERG ARNDT [DE] ET AL) 29 October 2020 (2020-10-29) * paragraphs [0002], [0050] - [0053]; figure 1 * | 1 | |
| Y | US 2015/298730 A1 (WIKTOR ROLAND [DE] ET AL) 22 October 2015 (2015-10-22) * paragraphs [0095] - [0099] * | 1,9,10 | |

**TECHNICAL FIELDS SEARCHED (IPC)**

F15B
E02F

The present search report has been drawn up for all claims

| Place of search | Date of completion of the search | Examiner |
|---|---|---|
| Munich | 8 October 2025 | Toffolo, Olivier |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 17 7043

This annex lists the patent family members relating to the patent documents cited in  the above-mentioned European search report.
The members are as contained in the European Patent Office EDP file on
The European Patent Office is in no way liable for these particulars which are merely given for the purpose of information.

08-10-2025

| Patent document cited in search report | | Publication date | Patent family member(s) | | Publication date |
|---|---|---|---|---|---|
| US 4376612 | A | 15-03-1983 | AR | 229244 A1 | 15-07-1983 |
| | | | BE | 888960 A | 26-11-1981 |
| | | | BR | 8103310 A | 16-02-1982 |
| | | | CA | 1162888 A | 28-02-1984 |
| | | | DE | 3120110 A1 | 25-02-1982 |
| | | | ES | 8207610 A1 | 01-10-1982 |
| | | | FR | 2503214 A2 | 08-10-1982 |
| | | | GB | 2076777 A | 09-12-1981 |
| | | | IT | 1144569 B | 29-10-1986 |
| | | | JP | H0260812 B2 | 18-12-1990 |
| | | | JP | S5719429 A | 01-02-1982 |
| | | | US | 4376612 A | 15-03-1983 |
| US 2022267982 | A1 | 25-08-2022 | AT | 17140 U2 | 15-07-2021 |
| | | | EP | 4047143 A1 | 24-08-2022 |
| | | | US | 2022267982 A1 | 25-08-2022 |
| US 2020340503 | A1 | 29-10-2020 | CN | 112460083 A | 09-03-2021 |
| | | | DE | 102019110917 A1 | 29-10-2020 |
| | | | EP | 3734082 A1 | 04-11-2020 |
| | | | JP | 7523933 B2 | 29-07-2024 |
| | | | JP | 2020183806 A | 12-11-2020 |
| | | | TW | 202104758 A | 01-02-2021 |
| | | | US | 2020340503 A1 | 29-10-2020 |
| US 2015298730 | A1 | 22-10-2015 | CN | 104797827 A | 22-07-2015 |
| | | | CN | 110242638 A | 17-09-2019 |
| | | | EP | 2923090 A1 | 30-09-2015 |
| | | | US | 2015298730 A1 | 22-10-2015 |
| | | | WO | 2014081353 A1 | 30-05-2014 |

EPO FORM P0459

For more details about this annex : see Official Journal of the European Patent Office, No. 12/82